# EUROPÄISCHE PATENTSCHRIFT

(11) **EP 2 297 486 B1**
(45) Veröffentlichungstag und Bekanntmachung des Hinweises auf die Patenterteilung: **29.02.2012**
(21) Anmeldenummer: 09768830.3
(22) Anmeldetag: 25.06.2009
(51) Int. Cl.: F16H 57/04, F16H 15/42

(54) **KEGELREIBRINGGETRIEBE**
BEVEL FRICTION RING GEAR
ENGRENAGE À ROUES CONIQUES ET ANNEAU DE FRICTION

(30) Priorität: 26.06.2008 DE 102008029945; 20.03.2009 DE 102009013701
(43) Veröffentlichungstag der Anmeldung: 23.03.2011
(73) Patentinhaber: Rohs, Ulrich, 52351 Düren (DE)
(72) Erfinder: Rohs, Ulrich, 52351 Düren (DE)
(74) Vertreter: Reuther, Martin
(86) Internationale Anmeldenummer: PCT/DE2009/000880
(87) Internationale Veröffentlichungsnummer: WO 2009/155906

(56) Entgegenhaltungen:
- EP-A- 0 878 641
- EP-A- 0 980 993
- WO-A-2009/122837

## Beschreibung

Die Erfindung betrifft ein Kegelreibringgetriebe mit zwei Kegeln und einem Reibring, der zwischen den Kegeln ein Drehmoment überträgt, wobei die beiden Kegel jeweils über ein Lager an einem Gestell gelagert sind.

Derartige Kegelreibringgetriebe sind beispielsweise aus der EP 0 878 641 A1 hinlänglich bekannt, wobei schon diese Druckschrift die Verwendung eines Traktionsfluids offenbart, wobei hierzu ein Traktionsfluidraum über entsprechende Lagerdichtungen, welche jeweils auf den Kegelräumen zugewandten Seite von Lagern, die die Kegel an einem Gestell lagern, angeordnet sind.

Dabei hat sich herausgestellt, dass an sich getrennte Fluidräume mit einem Traktionsfluid einerseits und einem Schmiermittel andererseits die Eigenschaften eines derartigen Kegelreibringgetriebes insbesondere gegenüber Kegelreibringgetrieben, die gänzlich ohne Fluide arbeiten, aber auch gegenüber Getrieben, die lediglich Schmiermittel oder lediglich Traktionsfluide verwenden, verbessern und höhere Wirkungsgrade ermöglichen.

Es ist Aufgabe vorliegender Erfindung, ein gattungsgemäßes Kegelreibringgetriebe bereit zu stellen, welches dem gegenüber einen noch höheren. Wirkungsgrad aufweist.

Als Lösung wird ein Kegelreibringgetriebe mit zwei Kegeln und einem Reibring vorgeschlagen, der zwischen den beiden Kegeln ein Drehmoment überträgt, wobei die beiden Kegel jeweils über Lager an einem Gestell gelagert sind und wobei sich das Kegelreibringgetriebe dadurch auszeichnet, dass wenigstens einer der beiden Kegel auf seinen beiden Seiten ein Lager aufweist und dass ein erstes der beiden Lager zum Kegel hin abgedichtet und ein zweites der beiden Lager zum Kegel hin offen ist.

Obgleich somit letztlich hinsichtlich eines verlustarmen Laufs des offenen Lagers einerseits und einer guten Traktion zwischen Reibring und Kegel andererseits in Bezug auf das offene Lager ein Kompromiss eingegangen werden muss, scheint es insgesamt möglich, den Gesamtwirkungsgrad eines Kegelreibringgetriebes bei entsprechender Ausgestaltung zu verbessern, was anscheinend auch daran liegt, dass ein entsprechender Kompromiss lediglich hinsichtlich eines der Lager eingegangen werden muss. Insoweit kann das abgedichtete Lager entsprechend extremer ausgelegt und zur Übernahme eines Großteils der Lagerkräfte insbesondere zu besonderen Betriebsbedingungen verwendet werden. Andererseits ist es dementsprechend möglich, dass offene Lager insbesondere bei geeigneten Betriebsbedingungen möglichst zu entlasten, um so ungeeignete Wirkungen eines Fluids mit verhältnismäßig hoher Traktionswirkung zu vermeiden. In diesem Zusammenhang versteht es sich, dass auch andere geeignete Maßnahmen, beispielsweise die Wahl geeigneter Materialien oder Beschichtungen und örtlich begrenzte Fördereinrichtungen oder ähnliches zum Abtransport des Traktionsfluids aus dem offenen Lager, vorteilhaft zur Anwendung kommen können. Auch scheint sich die an dem offenen Lager nicht auftretende Dichtreibung entsprechend in der Verlustbilanz positiv auszudrücken, wobei andererseits ein Verzicht auf sämtliche Lagerdichtungen zu entsprechend vorteilhaften Wirkungsgraden nicht führt.

In vorliegendem Zusammenhang ist der Begriff "Seiten" möglichst weit zu verstehen und bezieht sich jeweils auf eine durch das Kegelreibringgetriebe gelegte Ebene, durch welche die beiden Seiten entsprechend definiert werden. In Bezug auf lediglich einen Kegel bezieht sich der Begriff "Seite" vorzugsweise auf die Kegelachse senkrecht schneidende Ebene, die innerhalb des Kegels angeordnet ist.

In der Regel weist der wenigstens eine Kegel lediglich an einer Anschlussseite einen Drehanschluss auf. Dieses kann beispielsweise ein entsprechender Drehantrieb oder ein entsprechender Drehabtrieb sein. Dieses liegt in der Regel daran, dass einem Kegelreibringgetriebe jeweils noch weitere Getriebeglieder oder Antriebe vor- bzw. nachgeschaltet sind, bevor das Drehmoment beispielsweise auf die Räder eines Kraftfahrzeugs übertragen wird. Derartige Getriebeglieder können beispielsweise ein Rückwärtsgang oder ein Differentialgetriebe sein. Als Antrieb bietet sich beispielsweise ein Verbrennungsmotor an, der dementsprechend lediglich an einer Seite eines Eingangskegels angreifen kann. Vorzugsweise ist bei einer derartigen Ausgestaltung das auf der Anschlussseite liegende Lager abgedichtet, da in der Regel gerade an dieser Anschlussseite weitere Getriebeglieder, wie beispielsweise der vorgenannte Motor oder auch das vorgenannte Differential bzw. der vorgenannten Rückwärtsgang angeordnet sind. Auf diese Weise kann das entsprechende Lager unmittelbar über eine Schmierung dieser Getriebeglieder geschmiert bzw. gekühlt werden. Da demgegenüber das andere Lager offen ausgebildet ist, wobei jedoch auf diese Seite dann in der Regel keine weiteren Getriebeglieder vorgesehen sind, können somit die oben genannten Vorteile unmittelbar realisiert werden.

Da ein Kegelreibringgetriebe in der Regel wenigstens zwei Kegel aufweist, wobei ggf. einer der Kegel auch eine Zylinderwalze sein kann, ist es dementsprechend von Vorteil, wenn beide Kegel auf ihren beiden Seite jeweils ein Lager aufweisen und jeweils ein erstes der beiden Lager zum jeweiligen Kegel hin abgedichtet und ein zweites der beiden Lager zum jeweiligen Kegel hin offen ist. Insofern lassen sich die für einen Kegel vorstehend erläuterten Vorteile für beide Kegel umsetzen. Sollte das Kegelreibringgetriebe noch weitere Kegel aufweisen, gilt entsprechendes.

Die vorgenannten Vorteile kumulieren, wenn das Kegelreibringgetriebe zwei Seiten aufweist und die beiden offenen Lager der beiden Kegel auf derselben Seite angeordnet sind.

Letzteres gilt beispielsweise, wenn das Kegelreibringgetriebe an einem Motorblock befestigt ist und die offenen Lager auf der dem Motorblock abgewandten Seite angeordnet sind. In der Regel endet auf dieser Seite die Gesamtanordnung aus Motorblock und Getriebe, sodass auf separate Zuleitungen von Schmiermittel oder ähnliches auf dieser Seite verzichtet werden kann.

Kumulativ beziehungsweise alternativ kann es von Vorteil sein, wenn das Kegelreibringgetriebe eine Overdrive-Seite, also eine Seite mit einem hohen Übersetzungsverhältnis, aufweist und die offenen Lager an der Overdrive-Seite angeordnet sind. Im Overdrive sind erfahrungsgemäß niedrigere Anpresskräfte notwendig, sodass davon ausgegangen wird, dass die Nachteile eines Traktionsfluids, nämlich die erhöhten Reibwerte in dem Lager, eine nicht so wesentliche Bedeutung erlangen.

Gegenüber dem abgedichteten Lager reduziert sich der Nachteil des Traktionsfluids mit seinen erhöhten Reibungsverlusten im Lager darüber hinaus dadurch, dass andererseits auf eine Dichtung mit der hiermit verbundenen Dichtreibung verzichtet werden kann. Dieses ist insbesondere dann von Vorteil, wenn die Kegel lediglich an einer Seite einen Drehanschluss aufweisen und das offene Lager an der anderen Seite vorgesehen ist, da dann das Lager und gleichzeitig der die Kegel umfassende Raum auf der dem Kegel abgewandten Seite des Lagers über eine einfache Abdeckung oder ähnliches abgedichtet werden kann.

In vorliegendem Zusammenhang versteht es sich, dass als "zu einer Seite offenes Lager" jedes Lager angesehen wird, welches an seiner entsprechenden Seite keine berührende Dichtung aufweist, wobei diesbezüglich dementsprechend beispielsweise auch eine Labyrinthdichtung als "offen" bezeichnet wird.

Andererseits versteht es sich, dass ein offenes Lager vorzugsweise an seiner dem Kegel abgewandten Seite abgedichtet ist, damit Traktionsfluid das Kegelreibringgetriebe nicht verlassen kann oder in unerwünschter Weise in Bereiche des Kegelreibringgetriebes gelangt und diese kontaminiert.

Die Abdichtung erfolgt vorzugsweise dergestalt, dass diese an der dem Kegel abgewandten Seite des offenen Lagers vorgesehene Abdichtung einen Lagerzapfen des Kegels berührungslos umgreift. Auf diese Weise können Reibungsverluste, die insbesondere durch eine berührende Abdichtung bedingt sein können, vermieden werden.

Vorzugsweise bildet die an der dem Kegel abgewandten Seite des offenen Lagers vorgesehene Abdichtung einen Fluidraum, dessen axiale Erstreckung kleiner ist als die Wandstärke des Gestells im Bereich des offenen Lagers. Durch eine derartige Ausgestaltung kann ein zu großer Fluidraum vermieden werden, in welchem sich unnötig viel Traktionsfluid ansammeln kann, was letztlich nur zu Verlusten führt.

Um kumulativ bzw. alternativ hierzu ein Ansammeln von Traktionsfluid möglichst zu vermeiden, kann die an der dem Kegel abgewandten Seite des offenen Lagers vorgesehene Abdichtung einen Fluidraum bilden, der sich zu dem offenen Lager hin nicht verjüngt. Etwaiges Traktionsfluid kann dann ohne Weiteres in Richtung Lager abließen und durch dieses hindurch wieder in den Bereich, in dem die Kegel angeordnet sind, gelangen. Es versteht sich, dass alternativ auch geeignete Rückführungen, wie Bohrungen oder Kanäle, vorgesehen sein können, was jedoch verhältnismäßig aufwändig ist.

Die vorstehend erläuterten Vorteile ergeben sich insbesondere, wenn Naphten als Traktionsfluid zur Anwendung kommt. Es hat sich überraschender Weise herausgestellt, dass Naphten-Öl trotz seine hervorragenden Fähigkeit ein Drehmoment reibend zwischen zwei Oberflächen zu übertragen, wie diese für ein Traktionsfluid bei einem Kegelreibringgetriebe benötigt werden, ein Lager, welches die Kegel eines Kegelreibringgetriebes lagert, nicht schädigt, obgleich eigentlich mit entsprechenden Druck-, Kraft- und Reibungsverhältnissen auch im Lager zu rechnen ist. Es wird vermutet, dass die wesentlich kleineren Anpressflächen zwischen den Wälzkörpern des Lagers einerseits und den Laufflächen dieses Lagers andererseits zu diesem überraschenden Effekt beitragen. Aber auch bei Gleitlagern erscheint diese Ausgestaltung vorteilhaft umsetzbar zu sein. Insoweit versteht es sich, dass die Verwendung von Naphten-Öl bei Kegelreibringgetrieben auch unabhängig von den übrigen Merkmalen vorliegender Erfindung entsprechend vorteilhaft sein kann, da der vorstehend angedeutete überraschende Effekt auch an anderer Stelle eines Kegelreibringgetriebes entsprechend genutzt werden kann.

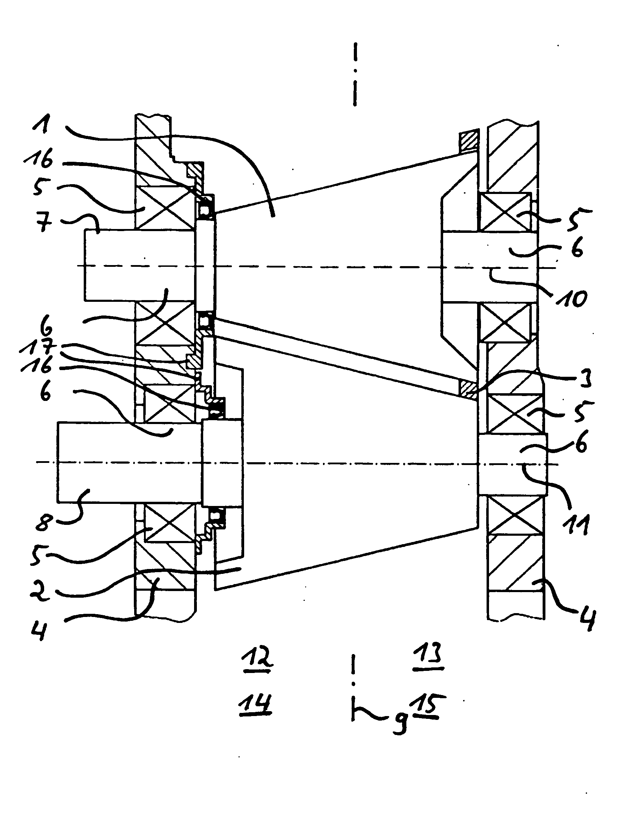

Weitere Vorteile, Ziele und Eigenschaften vorliegender Erfindung werden in der nachfolgenden Beschreibung anliegender Zeichnung erläutert. In der Zeichnung zeigt die einzige
- Figur: eine schematische Seitenansicht eines erfindungsgemäßen Kegelreibringgetriebes.

Das in der Figur dargestellte Kegelreibringgetriebe weist einen Eingangskegel 1 und einen Ausgangskegel 2 auf, die um einen Spalt beanstandet in einem Gestell 4 gelagert sind, wobei der Spalt von einem Reibring 3 der den Eingangskegel 1 umgreift und in dem Spalt verlagerbar ist, überbrückt wird. Die Verlagerung ermöglicht damit eine stufenlose Veränderung des Übersetzungsverhältnisses zwischen den beiden Kegeln 1, 2.

Die Lagerung der beiden Kegel 1, 2 erfolgt über Lager 5 (lediglich schematisch dargestellt), die letztlich in jeder beliebigen Art und Weise, beispielsweise als Kegelrollenlager, Pendelrollenlager, Kugellager, Zylinderwalzenlager oder auch als Gleitlager ausgebildet sein können.

Bei vorliegendem Ausführungsbeispiel sind die Kegel 1, 2 jeweils an Kegelzapfen 6 gelagert. Es versteht sich, dass auch andere Lagerausgestaltungen, beispielsweise eine Innenlagerung innerhalb einer Ausnehmung eines Kegels, vorgesehen sein können.

Bei vorliegendem Ausführungsbeispiel ist der am spitzen Ende des Eingangskegels 1 angeordnete Kegelzapfen 6 als Eingangswellenzapfen 7 ausgebildet und in an sich bekannter und daher nicht weiter dargestellter Weise mit einem Antrieb, beispielsweise mit einem Kraftfahrzeugmotor, verbindbar. Der am breiten Ende des Eingangskegels 6 angeordnete Wellenzapfen 6 hingegen überträgt bei diesen Ausführungsbeispiel kein Drehmoment. Dementsprechend weist der Eingangskegel 1 lediglich einen Drehanschluss, nämlich den Antriebswellenzapfen 7, auf.

In ähnlicher Weise überträgt der am spitzen Ende des Ausgangskegels 2 angeordnete Kegelzapfen 6 ebenfalls kein Drehmoment. Auf der der Kegelspitze des Ausgangskegels 2 abgewandten Seite, also auf der breiten Seite des Ausgangskegels 2, ist der entsprechende Kegelzapfen 6 als Abtriebswellenzapfen 8 ausgebildet und in an sich bekannter und daher nicht weiter dargestellter Weise mit einem Abtriebsritzel (nicht dargestellt) wirkverbunden. Es versteht sich, dass diesbezüglich auch jede andere Abtriebsart, beispielsweise über einen Riemen, vorgesehen sein kann. Wie unmittelbar ersichtlich, weist somit auch der Ausgangskegel 2 lediglich an einer seiner Seiten einen Drehanschluss, nämlich den Abtriebswellenzapfen 8, auf.

Durch die beiden Kegel 1, 2 kann eine Ebene 9 (strichpunktiert angedeutet) gelegt werden, welche die Eingangskegelachse 10 und die Ausgangskegelachse 11 senkrecht schneidet. Bezüglich der Ebene 9 lassen sich zwei Seiten 12 und 13 definieren, denen je Kegel 1, 2 jeweils ein Lager 5 zugeordnet werden kann. Es versteht sich hierbei, dass die Ebene 9 nicht zwingend mittig hinsichtlich der Kegel 1, 2 angeordnet sein muss. Für eine betriebssichere Definition reicht es aus, wenn die Ebene 9 die Oberfläche der Kegel 1, 2 schneidet.

Entsprechend der vorstehenden Erläuterung hinsichtlich der Seiten 12, 13 kann die Seite 12 als Anschlussseite 14, also als die Seite, an welcher die Drehanschlüsse, als da sind Antriebswellenzapfen 7 und der Abtriebswellenzapfen 8, zu finden sind, definiert werden. Ebenso kann, wenn der Motorblock unmittelbar in der Umgebung des Antriebswellenzapfens 7 angeordnet ist, die Seite 12 als die dem Motorblock zugewandte Seite und die Seite 13 als die dem Motorblock abgewandte Seite definiert werden. Darüber hinaus kann die Seite 13, wie unmittelbar aus der Anordnung der beiden Kegel 1, 2 ersichtlich, als Overdrive-Seite 15, also als die Seite mit einem hohen Übersetzungsverhältnis definiert werden.

Die auf der Seite 12 liegende Lager 5 sind jeweils über Dichtringe 16 abgedichtet, die jeweils an Dichtringträgern 17 angeordnet sind, welche ihrerseits an dem Gestell 4 befestigt sind. Wie unmittelbar ersichtlich, sind derartige Dichtungen an den Lagern 5 auf der Seite 13 nicht vorgesehen. Bei einer derartigen Ausgestaltung wird es möglich, die Kegel 1, 2 und den Reibring mit Traktionsfluid zu benetzen, während dieses Traktionsfluid die auf der Seite 12 angeordneten Lager 5 nicht erreicht. Diese können je nach konkreter Umsetzung ggf. mit einem Schmiermittel benetzt werden, was sich insbesondere dann anbietet, wenn ein derartiges Schmiermittel für die weiteren Getriebeglieder, wie beispielsweise einen Rückwärtsgang oder ein Differential, ohnehin zur Anwendung kommt.

Die auf der Seite 13 vorgesehen Lager 5 hingegen werden von dem Traktionsfluid erreicht und unterliegen mithin einer entsprechend höheren Belastung, wobei durch den Verzicht auf Dichtringe oder sonstige reibende Dichtungen an dieser Stelle eine Dichtreibung nicht auftritt, wodurch die erhöhte und durch das Traktionsfluid bedingte Lagerreibung zumindest teilweise kompensiert werden kann.

In diesem Zusammenhang versteht es sich, dass das Gestell 4 auf der Seite 13 auf seiner den Kegeln 1, 2 abgewandten Seite ohne weiteres abgedichtet beziehungsweise verschlossen werden kann, was beispielsweise durch eine entsprechende Abdeckplatte realisiert werden kann.

Wird nunmehr der Bereich der Kegel mit einem Naphten-Öl gefüllt, wobei die Ölmenge de konkreten Erfordernissen angepasst wird, so kann dieses, insbesondere wenn die Kegel rotieren auch in die Lager 5 auf der Seite 13 gelangen und dort wie vorstehend erläutert als Kühlmittel genutzt werden.

### Bezugszeichenliste:

- 1: Eingangskegel
- 2: Ausgangskegel
- 3: Reibring
- 4: Gestell
- 5: Lager
- 6: Kegelzapfen
- 7: Antriebswellenzapfen
- 8: Abtriebswellenzapfen
- 9: Ebene
- 10: Eingangskegelachse
- 11: Ausgangskegelachse
- 12: Seite
- 13: Seite
- 14: Anschlussseite
- 15: Overdrive-Seite
- 16: Dichtring
- 17: Dichtringträger

## Patentansprüche (Patentansprüche für folgende(n) Vertragsstaat(en): AT, BE, CH, DK, ES, FR, GB, GR, IT, LI, LU, MC, NL, SE)

1. Kegelreibringgetriebe mit zwei Kegeln (1,2) und einem Reibring (3) der zwischen den beiden Kegeln ein Drehmoment überträgt, wobei die beiden Kegel jeweils über Lager (5) an einem Gestell (4) gelagert sind, **dadurch gekennzeichnet, dass** wenigstens einer der beiden Kegel auf seinen beiden Seiten ein Lager aufweist und dass ein erstes der beiden Lager zum Kegel hin abgedichtet und ein zweites der beiden Lager zum Kegel hin offen ist.

2. Kegelreibringgetriebe nach Anspruch 1, **dadurch gekennzeichnet, dass** der wenigstens eine Kegel lediglich an einer Anschlussseite einen Drehanschluss (8), beispielsweise einen Abtriebswellenzapfen oder eine Antriebswellenzapfen, aufweist und dass das auf der Anschlussseite (14) liegende Lager abgedichtet ist.

3. Kegelreibringgetriebe nach Anspruch 1 oder 2, **dadurch gekennzeichnet, dass** beide Kegel auf ihren beiden Seiten jeweils ein Lager aufweisen, wobei jeweils ein erstes der beiden Lager zum jeweiligen Kegel hin abgedichtet und ein zweites der beiden Lager zum jeweiligen Kegel hin offen ist.

4. Kegelreibringgetriebe nach Anspruch 3, **dadurch gekennzeichnet, dass** das Kegelreibringgetriebe zwei Seiten (12,13) aufweist und die beiden offenen Lager auf derselben Seite (13) angeordnet sind.

5. Kegelreibringgetriebe nach Anspruch 4, **dadurch gekennzeichnet, dass** das Kegelreibringgetriebe an einem Motorblock befestigt ist und die offenen Lager auf der dem Motorblock abgewandten Seite angeordnet sind.

6. Kegelreibringgetriebe nach Anspruch 4 oder 5, **dadurch gekennzeichnet, dass** das Kegelreibringgetriebe eine Overdrive-Seite, also eine Seite mit einem hohen Gang, aufweist und die offenen Lager auf der Overdrive-Seite angeordnet sind.

7. Kegelreibringgetriebe nach einem der vorstehenden Ansprüche, **dadurch gekennzeichnet, dass** das zum Kegel hin offene Lager an seiner dem Kegel abgewandten Seite abgedichtet ist.

8. Kegelreibringgetriebe nach Anspruch 7, **dadurch gekennzeichnet, dass** die an der dem Kegel abgewandten Seite des offenen Lagers vorgesehene Abdichtung einen Lagerzapfen des Kegels berührungslos umgreift.

9. Kegelreibringgetriebe nach Anspruch 8, **dadurch gekennzeichnet, dass** die an der dem Kegel abgewandten Seite des offenen Lagers vorgesehene Abdichtung einen Fluidraum bildet, dessen axiale Erstreckung kleiner ist als die Wandstärke des Gestells im Bereich des offenen Lagers.

10. Kegelreibringgetriebe nach Anspruch 8 oder 9, **dadurch gekennzeichnet, dass** die an der dem Kegel abgewandten Seite des offenen Lagers vorgesehene Abdichtung einen Fluidraum bildet, der sich zu dem offenen Lager hin nicht verjüngt.

11. Kegelreibringgetriebe nach einem der vorstehenden Ansprüche, **dadurch gekennzeichnet, dass** ein Bereich der Kegel mit einem Naphten-Öl wobei die Ölmenge den konkreten Erfordernissen angepasst ist, gefüllt ist, in das zum Kegel hin offene Lager gelangt und dort als Kühlmittel genutzt wird.

12. Kegelreibringgetriebe nach einem der vorstehenden Ansprüche, **gekennzeichnet durch** Naphten als Traktionsfluid.

## Patentansprüche (Patentansprüche für folgende(n) Vertragsstaat(en): DE)

1. Kegetreibringgetriebe mit zwei Kegeln (1,2) und einem Reibring (3), der zwischen den beiden Kegeln ein Drehmoment überträgt, wobei die beiden Kegel jeweils über Lagen (5) an einem Gestell (4) gelagert sind, **dadurch gekennzeichnet, dass** wenigstens einer der beiden Kegel auf seinen beiden Seiten ein Lager aufweist und dass ein erstes der beiden Lager zum Kegel hin abgedichtet und ein zweites der beiden Lager zum Kegel hin offen ist, wobei ein Bereich der Kegel mit einem Naphten-Öl, wobei die Ölmenge den konkreten Erfordernissen angepasst ist, gefüllt ist, in das zum Kegel hin offene Lager gelangt und dort als Kühlmittel genutzt wird.

2. Kegelreibringgetriebe nach Anspruch 1, **dadurch gekennzeichnet, dass** (8) der wenigstens eine Kegel lediglich an einer Anschlussseite einen Drehanschluss (8), beispielsweise einen Abtriebswellenzapfen oder eine Antriebswellenzapfen, aufweist und dass das auf der Anschlussseite (14) liegende Lager abgedichtet ist.

3. Kegelreibringgetriebe nach Anspruch 1 oder 2, **dadurch gekennzeichnet, dass** beide Kegel auf ihren beiden Seiten jeweils ein Lager aufweisen, wobei jeweils ein erstes der beiden Lager zum jeweiligen Kegel hin abgedichtet und ein zweites der beiden Lager zum jeweiligen Kegel hin offen ist.

4. Kegelreibringgetriebe nach Anspruch 3, **dadurch gekennzeichnet, dass** das Kegelreibringgetriebe zwei Seiten (12,13) auf weist und die beiden offenen Lager auf derselben Seite (13) angeordnet sind.

5. Kegelreibringgetriebe nach Anspruch 4, **dadurch gekennzeichnet, dass** das Kegelreibringgetriebe an einem Motorblock befestigt ist und die offenen Lager auf der dem Motorblock abgewandten Seite angeordnet sind.

6. Kegelreibringgetriebe nach Anspruch 4 oder 5, **dadurch gekennzeichnet, dass** das Kegelreibringgetriebe eine Overdrive-Seite, also eine Seite mit einem hohen Gang, aufweist und die offenen Lager auf der Overdrive-Seite angeordnet sind.

7. Kegelreibringgetriebe nach einem der vorstehenden Ansprüche, **dadurch gekennzeichnet, dass** das zum Kegel hin offene Lager an seiner dem Kegel abgewandten Seite abgedichtet ist.

8. Kegelreibringgetriebe nach Anspruch 7, **dadurch gekennzeichnet, dass** die an der dem Kegel abgewandten Seite des offenen Lagers vorgesehene Abdichtung einen Lagerzapfen des Kegels berührungslos umgreift.

9. Kegelreibringgetriebe nach Anspruch 8. **dadurch gekennzeichnet, dass** die an der dem Kegel abgewandten Seite des offenen Lagers vorgesehene Abdichtung einen Fluidraum bildet, dessen axiale Erstreckung kleiner ist als die Wandstärke des Gestells im Bereich des offenen Lagers.

10. Kegelreibringgetriebe nach Anspruch 8 oder 9, **dadurch gekennzeichnet, dass** die an der dem Kegel abgewandten Seite des offenen Lagers vorgesehene Abdichtung einen Fluidraum bildet, der sich zu dem offenen Lager hin nicht verjüngt.

11. Kegelreibringgetriebe nach einem der vorstehenden Ansprüche, **gekennzeichnet durch** Naphten als Traktionsfluid.

## Claims (Claims for the following Contracting State(s): AT, BE, CH, DK, ES, FR, GB, GR, IT, LI, LU, MC, NL, SE)

1. A conical friction ring gearbox with two cones (1,2) and a friction ring (3) which transmits a torque between the two cones, wherein the two cones are in each case mounted on a frame (4) by means of bearings (5), **characterised in that** at least one of the two cones has a bearing on both of its sides and **in that** a first of the two bearings is sealed towards the cone and a second of the two bearings is open toward the cone.

2. The conical friction ring gearbox according to Claim 1, **characterised in that** the at least one cone has a rotary connection (8), for example an output shaft journal or a drive shaft journal, only on one connection side ans **in that** the bearing located on the connection side (14) is sealed.

3. The conical friction ring gearbox according to Claim 1 or 2, **characterised in that** both cones have one bearing on both of their sides, wherein a first of the two bearings in each case is sealed towards the respective cone and a second of the two bearings is open towards the respective cone

4. The conical friction ring gearbox according to Claim 3, **characterised in that** the conical friction ring gearbox has two sides (12, 13) and the two open bearings are arranged on the same side (13).

5. The conical friction ring gearbox according to Claim 4, **characterised in that** the conical friction ring gearbox is fixed on an engine block and the open bearings are arranged on the side facing away from the engine block.

6. The conical friction ring gearbox according to Claim 4 or 5, **characterised in that** the conical friction ring gearbox has an overdrive side, i.e. a side with a high gear, and the open bearings are arranged on the overdrive side

7. The conical friction ring gearbox according to one of the preceding claims, **characterised in that** the bearing, which is open toward the cone, is sealed on its side facing away from the cone

8. The conical friction ring gearbox according to Claim 7, **characterised in that** the seal provided on the side of the open bearing facing away from the cone contactlessly surrounds a bearing journal of the cone.

9. The conical friction ring gearbox according to Claim 8, **characterised in that** the seal provided on the side of the open bearing facing away from the cone forms a fluid space, the axial extent of which is smaller than the wall thickness of the frame in the region of the open bearing.

10. The conical friction ring gearbox according to Claim 8 or 9, **characterised in that** the seal provided on the side of the open bearing facing away from the cone forms a fluid space which does not taper towards the open bearing.

11. The conical friction ring gearbox according to one of previous claims, **characterised in that** a region of the cone is filled with a naphthene oil, wherein the oil quantity is adapted to the actual requirements, gets into the bearing which is open towards the cone and is used there as a coolant.

12. The conical friction ring gearbox according to one of the preceding claims, **characterised by** naphthene as traction fluids.

## Claims (Claims for the following Contracting State(s): DE)

1. A conical friction ring gearbox with two cones (1, 2) and a friction ring (3) which transmits a torque between the two cones, wherein the two cones are in each case mounted on a frame (4) by means of bearings (5), **characterised in that** at least one of the two cones has a bearing on both of its sides and **in that** a first of the two bearings is sealed towards the cone and a second of the two bearings is open towards the cone, wherein a region of the cone is filled with a naphthene oil, wherein the oil quantity is adapted to the actual requirements, gets into the bearing which is open towards the cone and is used there as a coolant.

2. The conical friction ring gearbox according to Claim 1, **characterised in that** the at least one cone has a rotary connection (8), for example an output shaft journal or a drive shaft journal, only on one connection side and **in that** the bearing located on the connection side (14) is sealed.

3. The conical friction ring gearbox according to Claim 1 or 2, **characterised in that** both cones have one bearing on both of their sides, wherein a first of the two bearings in each case is sealed towards the respective cone and a second of the two bearings is open towards the respective cone.

4. The conical friction ring gearbox according to Claim 3, **characterised in that** the conical friction ring gearbox has two sides (12, 13) and the two open bearings are arranged on the same side (13).

5. The conical friction ring gearbox according to Claim 4, **characterised in that** the conical friction ring gearbox is fixed on an engine block and the open bearings are arranged on the side facing away from the engine block.

6. The conical friction ring gearbox according to Claim 4 or 5, **characterised in that** the conical friction ring gearbox has an overdrive side, i.e. a side with a high gear, and the open bearings are arranged on the overdrive side.

7. The conical friction ring gearbox according to one of the preceding claims, **characterised in that** the bearing, which is open towards the cone, is sealed on its side facing away from the cone.

8. The conical friction ring gearbox according to Claim 7, **characterised in that** the seal provided on the side of the open bearing facing away from the cone contactlessly surrounds a bearing journal of the cone.

9. The conical friction ring gearbox according to Claim 8, **characterised in that** the seal provided on the side of the open bearing facing away from the cone forms a fluid space, the axial extent of which is smaller than the wall thickness of the frame in the region of the open bearing.

10. The conical friction ring gearbox according to Claim 8 or 9, **characterised in that** the seal provided on the side of the open bearing facing away from the cone forms a fluid space which does not taper towards the open bearing.

11. The conical friction ring gearbox according to one of the preceding claims, **characterised by** naphthene as traction fluid.

## Revendications (Revendications pour l'(les) Etat(s) contractant(s) suivant(s): AT, BE, CH, DK, ES, FR, GB, GR, IT, LI, LU, MC, NL, SE)

1. Engrenage à roues coniques et anneau de friction doté de deux cônes (1, 2) et d'un anneau de friction (3), qui transmet un couple entre les deux cônes, les deux cônes étant montés respectivement au moyen de paliers (5) sur un bâti (4) **caractérié en ce qu**'au moins l'un des deux cônes présente un palier sur ses deux côtés et en ce qu'un premier des deux paliers est étanchéifié en direction du cône et un second des deux paliers est ouvert en direction du cône.

2. Engrenage à roues coniques et anneau de friction selon la revendication 1, **caractérisé en ce que** le au moins un cône présente uniquement sur un côté de branchement un branchement de rotation (8), par exemple un tenon d'arbre de sortie ou un tenon d'arbre d'entraînement et **en ce que** le palier situé sur le côté de branchement (14) est étanchéifié.

3. Engrenage à roues coniques et anneau de friction selon la revendication 1 ou 2, **caractérisé en ce que** les deux cônes présentent un palier sur chacun de ses deux côtés, un premier des seconds paliers étant étanchéifié à chaque fois en direction du cône respectif et un second des second paliers étant ouvert en direction du cône respectif.

4. Engrenage à roues coniques et anneau de friction selon la revendication 3, **caractérisé en ce que** l'engrenage à roues coniques et anneau de friction présente deux côtés (12, 13) et les deux paliers ouverts sont disposés sur le même côté (13).

5. Engrenage à roues coniques et anneau de friction selon la revendication 4, **caractérisé en ce que** l'engrenage à roues coniques et anneau de friction est fixé sur un bloc moteur et les paliers ouverts sont disposés sur le côté oppossé au bloc moteur.

6. Engrenage à roues coniques et anneau de friction selon la revendication 4 ou 5, **caractérisé en ce que** l'engrenage à roues coniques et anneau de friction présente un côté Overdrive, donc un côté avec une vitesse élevée, et les paliers ouverts sont disposés sur le côté Overdrive.

7. Engrenage à roues coniques et anneau de friction selon l'une des revendications précédentes, **caractérisé en ce que** le palier ouvert en direction du cône est étanchéifié sur son côté opposé au cône.

8. Engrenage à roues coniques et anneau de friction selon la revendication 7 **caractérisé en ce que** l'étanchéité prévue sur le côté, opposé au cône, du palier ouvert entoure sans contact un tenon de palier du cône.

9. Engrenage à roues coniques et anneau de frottememnt selon la revendication 8, **caractérisé en ce que** l'étanchéité prévue sur le côté, opposé au cône, du palier ouvert, forme un espace de fluide, dont l'extension axiale est inférieure à l'épaisseur de paroi du bâti dans la zone du palier ouvert.

10. Engrenage à roues coniques et anneau de friction selon la revendication 8 ou 9, **caractérisé en ce que** l'étanchéité prévue sur le côté, opposé au cône, du palier ouvert forme un espace de fluide qui ne se rétrécit pas en direction du palier ouvert .

11. Engrenage à roues coniques et anneau de friction selon l'une des revendications précédentes, **caractérisé en ce qu**'une zone des cônes est remplie avec une huile de naphthène, la quantité d'huile étant adaptée aux exigences concrètes, parvenant dans le palier ouvert en direction du cône et y étant utilisée comme réfrigérant

12. Engrenage à roues coniques et anneau de friction selon l'une des revendications précédents, **caractérisé par** du naphthène comme fluide de traction.

## Revendications (Revendications pour l'(les) Etat(s) contractant(s) suivant(s): DE)

1. Engrenage à roues coniques et anneau de friction doté de deux cônes et d'un anneau de friction, qui transmet un couple entre les deux cônes, les deux cônes étant montés respectivement au moyen de paliers sur un bâti, **caractérisé en ce qu'**au moins l'un des deux cônes présente un palier sur ses deux côtés et **en ce qu'**un premier des deux paliers est étanchéifié en direction du cône et un second des deux paliers est ouvert en direction du cône, une zone des cônes étant remplie d'une huile de naphtène, la quantité d'huile étant adaptée aux exigences concrètes, parvenant dans le palier (5) ouvert en direction du cône et y étant utilisée comme réfrigérant.

2. Engrenage à roues coniques et anneau de friction selon la revendication 1, **caractérisé en ce que** le au moins un cône présente un branchement de rotation uniquement sur un côté de branchement, par exemple un tenon d'arbre de sortie ou un tenon d'arbre d'entraînement et **en ce que** le palier situé sur le côté de branchement est étanchéifié.

3. Engrenage à roues coniques et anneau de friction selon la revendication 1 ou 2, **caractérisé en ce que** les deux cônes présentent un palier sur chacun de ses deux côtés, un premier des deux paliers étant étanchéifié à chaque fois en direction du cône respectif et un second des deux paliers étant ouvert en direction du cône respectif.

4. Engrenage à roues coniques et anneau de friction selon la revendication 3, **caractérisé en ce que** l'engrenage à roues coniques et anneau de friction présente deux côtés (12, 13) et les deux paliers ouverts sont disposés sur le même côté (13).

5. Engrenage à roues coniques et anneau de friction selon la revendication 4, **caractérisé en ce que** l'engrenage à roues coniques et anneau de friction est fixé sur un bloc moteur et les paliers ouverts sont disposés sur le côté opposé au bloc moteur.

6. Engrenage à roues coniques et anneau de friction selon la revendication 4 ou 5, **caractérisé en ce que** l'engrenage à roues coniques et bague de frottement présente un côté Overdrive, donc un côté avec une vitesse élevée, et les paliers ouverts sont disposés sur le côté Overdrive.

7. Engrenage à roues coniques et anneau de friction selon l'une des revendications précédentes, **caractérisé en ce que** le palier ouvert en direction du cône est étanchéifié sur son côté opposé au cône.

8. Engrenage à roues coniques et anneau de friction selon la revendication 7, **caractérisé en ce que** l'étanchéité prévue sur le côté, opposé au cône, du palier ouvert entoure sans contact un tenon de palier du cône.

9. Engrenage à roues coniques et anneau de friction selon la revendication 8, **caractérisé en ce que** l'étanchéité prévue sur le côté, opposé au cône, du palier ouvert forme un espace de fluide, dont l'extension axiale est inférieure à l'épaisseur de paroi du bâti dans la zone du palier ouvert.

10. Engrenage à roues coniques et anneau de friction selon la revendication 8 ou 9, **caractérisé en ce que** l'étanchéité prévue sur le côté, opposé au cône, du palier ouvert forme un espace de fluide qui ne se rétrécit pas en direction du palier ouvert.

11. Engrenage à roues coniques et anneau de friction selon l'une des revendications précédentes, **caractérisé par** du naphtène comme fluide de traction.
